**Europäisches Patentamt**

**European Patent Office**

**Office européen des brevets**

(11) Veröffentlichungsnummer: **0 140 875**
A2

# (12) EUROPÄISCHE PATENTANMELDUNG

(21) Anmeldenummer: 84890193.0

(22) Anmeldetag: 15.10.84

(51) Int. Cl.⁴: **B 23 P 15/28**

(30) Priorität: 18.10.83 AT 3706/83

(43) Veröffentlichungstag der Anmeldung: 08.05.85
Patentblatt 85/19

(84) Benannte Vertragsstaaten: **BE DE FR**

(71) Anmelder: **VEREINIGTE EDELSTAHLWERKE AKTIENGESELLSCHAFT (VEW), Elisabethstrasse 12, A-1010 Wien (AT)**

(72) Erfinder: **Marchard, Gustav, Unterzellerstrasse 81, A-3340 Waidhofen an der Ybbs (AT)**

(74) Vertreter: **Widtmann, Georg, Dr., Vereinigte Edelstahlwerke Aktiengesellschaft (VEW) Elisabethstrasse 12, A-1010 Wien (AT)**

(54) **Maschinenmesser.**

(57) Die Erfindung betrifft ein Maschinenmesser, insbesondere Kammesser, für die Zerspanung von Holz od. dgl., wobei der Messerkörper mit einem kohlenstoffhältigen Stahl aufgebaut ist und eine Span- und Freifläche eine vergütete Schneide bilden, wobei eine Oberflächenschicht, vorzugsweise in einer Dicke von 0,005 bis 0,03 mm der Freifläche, einen geringeren Kohlenstoffgehalt aufweist als der übrige Messerkörper bei sonst gleicher chemischer Zusammensetzung.

EP 0 140 875 A2

- 1 -

<u>Maschinenmesser</u>

Die Erfindung bezieht sich auf ein Maschinenmesser für die Zerspanung von Holz.

Die Zerspanung von Holz stellt an die Maschinenmesser besonders hohe Anforderungen. In der Regel werden kohlenstoffhältige vergütbare Stähle den an sie gestellten Anforderungen gerecht, da die Schneiden eine besonders hohe Beständigkeit aufweisen und andererseits ein relativ niedriglegierter Stahl zum Einsatz kommen kann.

Bei der Herstellung von Holzspänen ist es jedoch von hoher Bedeutung, daß diese Holzspäne besonders gleichförmig ausgebildet sind, da die Form der Holzspäne in die Eigenschaften des aus diesen erzeugten Produktes maßgebend eingeht. Das Bestreben bei der Entwicklung von Maschinenmessern ist bislang lediglich in jene Richtung gegangen, daß man Messer mit einer besonders hohen Standzeit erhält. Unberücksichtigt ist geblieben, daß neue Messer eine schlechtere Schneideigenschaft aufweisen als Messer, die einige Zeit bereits benützt wurden. Dieses Phänomen ist in der Praxis durchaus als "Reißen" od.dgl. bekannt, wodurch Späne entstehen, die eine gröbere Struktur aufweisen.

Die Erfindung hat sich nun zur Aufgabe gesetzt, ein Maschinenmesser zu schaffen, das bereits von Anbeginn des Einsatzes nicht die unerwünschte Überschärfe aufweist und über seine gesamte Standzeit Späne einer gleichmäßigen Qualität liefert.

Das erfindungsgemäße Maschinenmesser, insbesondere Kammesser, für die Zerspanung von Holz od.dgl., wobei der Messerkörper mit einem kohlenstoffhältigen Stahl aufgebaut ist und eine Span- und Freifläche eine vergütete Schneide bilden, besteht im wesentlichen darin, daß eine Oberflächenschichte, vorzugsweise in einer Dicke von 0,005 bis 0,03 mm der Freifläche, einen geringeren Kohlenstoffgehalt aufweist als der übrige Messerkörper bei sonst gleicher Zusammensetzung. Es hat sich völlig überraschend herausgestellt, daß ein derartiges Maschinenmesser bereits von Anfang an Späne einer gleichmäßigen Qualität liefert, da keine Überschärfe der Schneide auftritt und ein "Reißen" auch in der Anfangsphase vermieden ist.

Im folgenden wird die Erfindung an Hand eines Beispieles näher erläutert:

Ein geschliffener Flachstab mit einer Dicke von 6 mm aus einem Stahl folgender Zusammensetzung

|  |  | Gew.-% |
|---|---|---|
| | Kohlenstoff | 0,95 |
| | Silizium | 0,3 |
| | Mangan | 1,1 |
| | Chrom | 0,5 |
| | Wolfram | 0,5 |
| | Vanadium | 0,1 |

wurde abgelängt und in einem entkohlenden Medium (ein Salzbad) bei einer Temperatur von 880°C 5 min. lang gehalten. Der Flachstab wies damit eine vollständige Entkohlung auf seiner Oberfläche auf, die bis zu einer Tiefe von 0,02 mm reichte. Die so vorbehandelten Zuschnitte wurden durch Schleifen mit einer Schneide versehen. Danach erfolgte durch Stanzen die erwünschte Formgebung worauf gegebenenfalls weitere mechanische Bearbeitungen z.B.Gewindeschneiden u.dgl., durchgeführt werden können. Die Schneide wurde sodann durch Hochfrequenzeinwirkung gehärtet.

Aus einem Flachstahl, der nicht oberflächenentkohlt wurde, ist in analoger Weise ebenfalls ein Maschinenmesser gefertigt worden. Beide Messer kamen in Rotationsmaschinen zum Einsatz, wobei das oberflächenentkohlte Messer bereits am Beginn des Einsatzes gleichmäßige Späne für Spanplatten lieferte, wohingegen das Messer mit einem gleichbleibenden Kohlenstoffgehalt erst nach zehn Minuten Späne der gewünschten Form erzeugte.

- 3 -

Patentansprüche :

1. Maschinenmesser, insbesondere Kammesser, für die Zerspanung von Holz od.dgl., wobei der Messerkörper mit einem kohlenstoffhältigen Stahl aufgebaut ist und eine Span- und Freifläche eine vergütete Schneide bilden, dadurch gekennzeichnet, daß eine Oberflächenschicht, vorzugsweise in einer Dicke von 0,005 bis 0,03 mm der Freifläche, einen geringeren Kohlenstoffgehalt aufweist als der übrige Messerkörper bei sonst gleicher chemischer Zusammensetzung.

2. Messer nach Anspruch 1, dadurch gekennzeichnet, daß der der Freifläche gegenüberliegende Oberflächenbereich des Maschinenmessers ebenfalls einen geringeren Kohlenstoffgehalt aufweist.